# EUROPEAN PATENT APPLICATION

(11) **EP 4 394 947 A1**
(43) Date of publication of application: **03.07.2024**
(21) Application number: 22955897.8
(22) Date of filing: 16.11.2022
(51) Int. Cl.: H01M 4/583

(54) **NEGATIVE ELECTRODE MATERIAL AND BATTERY**

(71) Applicant: Kaifeng Ruifeng New Material Co., Ltd., Kaifeng, Henan 475231 (CN); BTR New Material Group Co., Ltd., Shenzhen, Guangdong 518106 (CN)
(72) Inventor: HUANG, Jian, Kaifeng, Henan 475231 (CN); ZHANG, Baoxuan, Kaifeng, Henan 475231 (CN); ZU, Mengyang, Kaifeng, Henan 475231 (CN); LIU, Ruoqi, Kaifeng, Henan 475231 (CN); ZHANG, Meng, Kaifeng, Henan 475231 (CN); LI, Zikun, Kaifeng, Henan 475231 (CN); YANG, Shuzhan, Kaifeng, Henan 475231 (CN); REN, Jianguo, Kaifeng, Henan 475231 (CN)
(74) Representative: Studio Torta S.p.A.
(86) International application number: PCT/CN2022/132163
(87) International publication number: WO 2024/103274

(57) **Abstract**

An anode material and a battery provided. The anode material includes artificial graphite particle, and there are pores inside and/or on surface of the artificial graphite particle, and the anode material has a pore volume of V cm³/kg, a true density of D g/cm³, and a specific surface area of S m²/g, where 4.0 ≤ V*S/D ≤ 10. The anode material and battery effectively improve active site of surface of anode material and enhance rate performance of anode material.

## Description

### TECHNICAL FIELD

The present disclosure relates to the technical field of anode material, and in particular to an anode material and a battery.

### BACKGROUND

Graphite has become a popular anode material of commercial lithium ion battery due to its advantages of high electronic conductivity, large lithium ion diffusion coefficient, small volume change in a layered structure before and after lithium intercalation, high lithium intercalation capacity, and low lithium intercalation potential.

A traditional graphitizing device for graphite anode mainly includes two main types, i.e. a crucible furnace and a box furnace, which both are intermittent working. Continuous production cannot be achieved due to the fact that the graphitization process needs to be powered off. Additionally, due to the limited characteristics of the temperature rising and cooling process of the device, i.e. the rates of temperature rising and falling are slow, resulting in a long production period. Usually, the graphitizing period ranges from 15 to 50 days. In the process of graphitization production, volatile components, impurity elements and the like in the raw material escape at high temperature, thereby forming pores inside and/or on the surface of graphite. Generally, artificial graphite has a certain number of pore structures. On the one hand, the presence of pores can increase diffusion channel of Li⁺ in the graphite material, and reduce diffusion resistance of Li⁺, thereby effectively improving rate performance of the material. On the other hand, too many pore structures will result in an increase of specific surface area of the material, thereby resulting in a degradation of initial efficiency and cycling performance of the product. In fact, the rate performance cannot be optimized by simply improving the pore structure, there is still a lot can be improved. Most researchers have focused on exploring impact of a single factor on the performance of graphite material, without developing a research deeply in terms of synergism of various factors to maximize the improvement of rate performance of graphite.

Therefore, at the present stage where the graphite material has been more developed, the mere improvement of single parameter cannot meet the requirements of the market for low-cost and high-performance graphite material. It is necessary to explore action mechanism of multiple factors synergistically to develop a graphite anode material meeting the market requirements.

### SUMMARY

In view of this, in response to the deficiencies in the art, the present disclosure provides a new anode material and a new battery. The anode material achieves an accurate regulation for pore volume of interior and/or on surface, specific surface area, and true density, combining them to maintain within a reasonable range, so as to improve capacity and rate performance of the anode material.

In a first aspect, the present disclosure provides an anode material, including artificial graphite with pores. The anode material has a pore volume of V cm³/kg, a true density of D g/cm³, and a specific surface area of S m²/g, where 4.0 ≤ V*S/D ≤ 10.

The pore volume is obtained by calculation in a pore size range of 17Å to 3000Å using a BJH Desortation cumulative volume of pores model, by testing by ASAP2460 equipment of American Micromeritics.

In some embodiments, the anode material has a particle size D₅₀ of 10 µm to 30 µm.

In some embodiments, the anode material has a particle size D₁₀ ≥ 5 µm.

In some embodiments, the anode material has a particle size D₉₀ ≤ 50 µm.

In some embodiments, the anode material has a pore volume of V cm³/kg, where 5 ≤ V ≤ 8.

In some embodiments, the anode material has a specific surface area of S m²/g, where 1.78 ≤ S ≤ 3.0.

In some embodiments, the anode material has a true density of D g/cm³, where 2.210 ≤ D ≤ 2.265.

In some embodiments, the pore includes at least one of micro-pore and meso-pore.

In some embodiments, the pores has an average pore size of 50Å to 200Å.

In some embodiments, the anode material has an interplanar spacing d₀₀₂ of (002) plane determined by X-ray diffraction, where 3.355Å ≤ d₀₀₂ ≤ 3.365Å.

In some embodiments, the artificial graphite particle has a peak intensity ratio I₀₀₂/I₁₁₀ of (002) plane to (110) plane of 65.0 to 120.0 and a peak intensity ratio I₀₀₄/I₁₁₀ of (004) plane to the (110) plane of 3.0 to 6.0 determined by X-ray diffraction.

In some embodiments, the artificial graphite includes an artificial graphite primary particle and/or an artificial graphite secondary particle.

In some embodiments, the anode material further includes an amorphous carbon.

In some embodiments, the anode material further includes an amorphous carbon, and a mass ratio of the amorphous carbon in the anode material is 0.1 wt% to 5 wt%.

In a second aspect, the present disclosure provides a battery, including the anode material according to the first aspect.

The technical solution of the present disclosure has at least the following beneficial effects:

The present disclosure provides an anode material, including artificial graphite, and there are pores inside and/or on surface of the artificial graphite. The anode material has a pore volume of V cm³/kg, a true density of D g/cm³, and a specific surface area of S m²/g, where 4.0 ≤ V*S/D ≤ 10. Generally, in the artificial graphite, a certain range of pore volume increases diffusion channel of Li ion, and a certain range of specific surface area ensures a sufficient electrochemical reaction interface, thus promoting diffusion of lithium ions at solid-liquid interface and in solid phase, reducing concentration polarization, and facilitating improvement of capacity and rate performance of the anode material. On this basis, the applicant has found through deep research that although there are sufficient diffusion channels and electrochemical reaction area for lithium ion, there is still wide room for improvement in rate performance. This is because that when lithium ions diffuse to surface of an artificial graphite, if arrangement of carbon atoms of the artificial graphite is relatively chaotic and degree of order thereof is less, there is a huge obstacle for the lithium ions to enter interior of the artificial graphite material to undergo electrochemical reaction with carbon atoms. Thus the diffusion channel and electrochemical reaction area are not fully utilized. While degree of order of an artificial graphite is directly related to true density thereof. In the present disclosure, V*S/D of the anode material is controlled within the above range, which facilitates combination of lithium ion and sufficient carbon atom under low obstacle, so as to obtain the anode material with better rate performance and capacity.

The anode material provided by the disclosure is produced through a continuous graphitization process, with continuous feeding and continuous discharging of all materials, and the time and temperature passing through high temperature zone are consistent. In graphitization process, by controlling heating rate and cooling rate, volatile components, impurity elements, and the like in the material are allowed to escape uniformly and quickly. At the same time, a press-molding size is controlled, and a certain amount of additive is introduced, so as to achieve accurate control of pore volume inside and/or on surface of the graphite. The synergistic use of the above processes overcomes problems of uneven heating of materials due to temperature gradient at different positions in traditional graphitization furnace, and of that indicators, such as specific surface area, pore volume, and true density of processed product, fluctuate greatly and are uncontrollable, so as to make the pore volume, specific surface area, and true density of the processed materials arrive desirable control and design requirements.

Due to use of continuous graphitization process, the anode material provided by the present disclosure has low energy consumption per unit mass, obvious advantages in cost and production period, and is environmentally friendly.

### BRIEF DESCRIPTION OF DRAWINGS

FIG. 1 is a scanning electron microscope image of an anode material prepared by Example 12 of the present disclosure; and
FIG. 2 is a distribution curve of pore size of the anode material prepared by Example 12 of the present disclosure.

### DESCRIPTION OF EMBODIMENTS

In order to better illustrate the present disclosure and facilitate the understanding of technical solutions of the present disclosure, the present disclosure will be further described in detail below. However, the following examples are merely simple examples of the present disclosure and are not intended to represent or limit the scope of protection of the present disclosure.

In a field of an anode material, development of a continuous graphitization device has been continuing for decades. As early as 1987, a patent (US06619591) discloses a device capable of continuously graphitizing a carbon-containing material. In recent years, the applicant has also continuously developed the continuous graphitization device. For example, the patent granted in 2019 (CN211425033U) discloses a vertical kiln for producing continuously lithium ion battery anode material, which can realize continuous discharging from a discharging port and meanwhile continuous feeding from a material pipeline. Compared with a traditional graphitizing process, the continuous graphitizing process has a shortened graphitizing time from several days to several hours, resulting in an obvious reduction in energy consumption. However, the graphitizing time is greatly shortened, leading to changes in microstructure of artificial graphite produced by the continuous graphitizing process, especially in internal pore structure and crystal form of the artificial graphite, compared with a conventional artificial graphite. For a long time, it has been verified in this field that these changes are difficult to meet performance requirements of artificial graphite, and it is difficult to be improved. Therefore, even though the continuous graphitization device has existed for three to four decades, artificial graphite anode product produced by continuous graphitizing still has no prior example of successful mass production.

In recent years, as energy resource becomes more scarce, the applicant has been consistently developing application of the continuous graphitization device for further reducing cost of the artificial graphite. The objective is to develop an artificial graphite anode material with performance equivalent to or even better than a conventional graphitizing anode material, so as to reduce energy consumption of the artificial graphite anode material, and further reduce costs. The applicant has developed various means through lots of preparation processes to improve the adverse changes of rapid temperature rise and fall on artificial a graphite product. After selecting the product, a series of different types of artificial graphite anode materials are obtained. Although microstructures of these artificial graphite anode materials are different from that of conventional artificial graphite product, their electrical performances can be basically equivalent to that of the conventional artificial graphite product, and even their electrical performances in some aspects and processing performance are more excellent or stable, which already have an ability for replacing the conventional artificial graphite product.

Hereinafter, one of preparation processes developed by the applicant is taken as an example to further describe the preparation process and related products in detail.

A preparation method of an anode material, including following steps:
S10, press-molding a mixture of coke powder, binder, additive, and solvent to obtain a first precursor, where the additive includes an inorganic compound, and a mass ratio of coke powder and additive is 100:(1 to 5), and a press-molding size is ϕ (10 mm to 100 mm) × (20 mm to 100 mm);
S20, pre-carbonizing the first precursor to obtain a second precursor; and
S30, placing the second precursor in a continuous graphitizing furnace, heating to 2800°C to 3200°C at a heating rate of 13°C/min to 20°C/min for graphitization for 1 h to 4 h, and cooling at a cooling rate of 20°C/min to 25°C/min, to obtain the anode material, where a ratio of heating rate and cooling rate is controlled at 0.5 to 1.

According to the preparation method of an anode material provided by the present disclosure, through press-molding the mixture of the coke powder, the binder, the additive and the solvent, the first precursor is pre-carbonized and then placed in a continuous graphitization furnace. By an extremely fast heating rate, the second precursor can reach graphitization temperature in a short period of time. The additive volatilizes and escapes, forming pores inside and/or on surface of the graphite particle. The pores serve as additional lithium storage space, increasing lithium storage capacity of the graphite material. In addition, the process of the materials entering and exiting the continuous graphitization furnace is completed within a few hours, resulting a high thermal energy utilization rate, which can reduce production costs.

The coke powder is obtained by crushing and shaping coke raw material, and the coke raw material includes at least one of petroleum coke, needle coke, pitch coke, and isotropic coke.

In some embodiments, the shaping includes at least one of crushing, spheroidizing, or grading. A median particle size of shaped coke powder is 15 µm to 20 µm, and more specifically can be 15 µm, 15.5 µm, 16 µm, 16.5 µm, 17 µm, 17.5 µm, 18 µm, 18.5 µm, 19 µm, or 20 µm, etc., but is not limited to the recited values, and other unrecited values within the range are also applicable. It is found through many tests that the median particle size of the coke powder is controlled within the above range, which facilitates all of the processability, capacity, and rate performance.

In some embodiments, a mass content of carbon in the coke powder is ≥ 80%, which can be 80%, 81%, 82%, 85%, 90%, 95%, or 96%, etc., but is not limited to the recited values, and other unrecited values within the range are also valid.

In some embodiments, the solvent includes at least one of water, ethanol, acetone, benzene, toluene, quinoline, tetrahydrofuran, and carbon tetrachloride.

In some embodiments, the binder includes at least one of petroleum resin, phenolic resin, epoxy resin, coumarone resin, potato starch, wheat starch, corn starch, sweet potato starch, Pueraria powder, and tapioca starch.

In some embodiments, the additive includes one of boron oxide, boron carbide, boron nitride, silicon carbide, boron carbide, boron nitride, boric acid, boron chloride, and sodium borate. On the one hand, the additive serves as a graphitization catalyst, and on the other hand, it volatilizes rapidly during the graphitization process, which facilitates formation of stable pores inside and/or on surface of the artificial graphite.

In some embodiments, a mass ratio of the coke powder, the binder, the solvent, and the additive is 100:(3 to 20):(5 to 50):(1 to 5), which specifically can be 100:3:5:1, 100:10:15:1, 100:15:20:5, 100:20:20:1, 100:20:15:3, 100:10:10:5, or 100:15:25:2, etc., but is not limited to the recited values, and other unrecited values within the range are also valid. An amount of the additive is controlled within the above range, which facilitates catalyzing the graphitization process. And on the other hand, volatilization of the additive at high temperature leads to formation of a certain number of pores inside and/or on surface of the graphite.

It can be understood that, in an embodiment, when proportion of the binder is low (a mass ratio of binder and coke powder is 3-10:100), the obtained artificial graphite is mainly composed of primary particles. In an embodiment, when proportion of the binder is high (a mass ratio of binder and coke powder is 10-20:100), the obtained artificial graphite is mainly composed of secondary particles.

In some embodiments, a manner for mixing the mixture includes at least one of mechanical stirring and ultrasonic dispersion. When mechanical stirring is adopted for mixing, a rotary slurry stirrer, a turbine stirrer, a flat slurry stirrer and the like can be adopted, as long as each components in the mixture are fully and uniformly mixed.

In some embodiments, a stirring rate is 10 r/min to 1000 r/min, which specifically can be 10 r/min, 50 r/min, 70 r/min, 100 r/min, 120 r/min, 150 r/min, 200 r/min, 300 r/min, 350 r/min, 400 r/min, 500 r/min, or 1000 r/min, etc., which is not limited herein. The stirring rate is controlled within the above range, which facilitates mixing of each components to form a uniform mixture.

The stirring can be carried out at normal temperature or in a preheating state. Preferably, a stirring temperature can be controlled at 25°C to 200°C. It can be understood that a proper preheating facilitates mixing of each components to form a uniform mixture.

In some embodiments, the press-molding includes at least one of extrusion, molding, rolling, and isostatic pressing.

In some embodiments, a pressure of the press-molding is 5 MPa to 100 MPa, and specifically can be 5 MPa, 15 MPa, 25 MPa, 30 MPa, 35 MPa, 40 MPa, 45 MPa, 50 MPa, 55 MPa, 60 MPa, 70 MPa, 80 MPa, 90 MPa, or 100 MPa, etc. By the press-molding, on the one hand, fluidity of materials in the graphitization process can be improved, and on the other hand, furnace loading amount and production capacity of materials can be also improved.

The press-molding size is controlled at ϕ (10 mm to 100 mm) × (20 mm to 100 mm) during the press-molding. Controlling the press-molding size within the above range facilitates to control specific surface area, as well as to feed and discharge materials during graphitization process.

In some embodiments, a reaction temperature of pre-carbonization is 500°C to 1000°C, and specifically can be 500°C, 550°C, 600°C, 700°C, 750°C, 800°C, 850°C, 900°C, or 1000°C, etc., but is not limited to the recited values, and other unrecited values within the range are also valid. It can be understood that the temperature of pre-carbonization is within the above range, which facilitates to discharge volatile matters and the like in coke raw material.

In some embodiments, a holding time of pre-carbonization is 1 h to 10 h, and specifically can be 1 h, 2 h, 3 h, 4 h, 5 h, 6 h, 7 h, 8 h, or 10 h, etc., but is not limited to the recited values, and other unrecited values within the range are also valid. Preferably, the holding time of pre-carbonization is 1 h to 4 h.

In some embodiments, a heating rate of pre-carbonization is 5°C/min to 20°C/min, and specifically can be 5°C/min, 6°C/min, 8°C/min, 10°C/min, 15°C/min, 15.5°C/min, or 20°C/min, etc., but is not limited to the recited values, and other unrecited values within the range are also valid.

In some embodiments, a cooling rate after pre-carbonization is 10°C/min to 30°C/min, and specifically can be 10°C/min, 15°C/min, 20°C/min, 25°C/min, 25.5°C/min, or 30°C/min, etc., but is not limited to the recited values, and other unrecited values within the range are also valid.

In some embodiments, the pre-carbonization is performed under a protective atmosphere, and the protective atmosphere includes at least one of nitrogen, helium, neon, argon, krypton, and xenon.

In some embodiments, a heating rate of graphitization can be 13°C/min, 15°C/min, 17°C/min, 18°C/min, or 20°C/min, and a cooling rate after graphitization can be 20°C/min, 21°C/min, 22°C/min, 23°C/min, 24°C/min, or 25°C/min.

In some embodiments, a structure of the continuous graphitization furnace is shown in patent CN211425033U.

In some embodiments, a process of graphitization includes heating to 2800°C to 3200°C at a heating rate of 13°C/min to 20°C/min, and remaining at 2800°C to 3200°C for 2 h to 4 h. It can be understood that rapid heating during the graphitization facilitates rapid escape of volatile matters inside the coke raw material and formation of pores in the product.

In some embodiments, a temperature of graphitization specifically can be 2800°C, 2850°C, 2900°C, 3000°C, 3100°C, 3150°C, 3180°C, or 3200°C, etc., but is not limited to the recited values, and other unrecited values within the range are also valid.

In some embodiments, a holding time of graphitization is 1 h to 4 h, and specifically can be 1 h, 1.5 h, 2 h, 2.5 h, 3 h, 3.5 h, 3.8 h, or 4 h, etc., but is not limited to the recited values, and other unrecited values within the range are also valid. Preferably, the holding time of graphitization is 2 h to 3 h.

In some embodiments, a cooling rate after graphitization is 20°C/min to 25°C/min, and specifically can be 20°C/min, 21°C/min, 22°C/min, 23°C/min, 24°C/min, or 25°C/min, etc., but is not limited to the recited values, and other unrecited values within the range are also valid. Rapid cooling, on the one hand, reduce occurrence of oxidation reaction of material during cooling process, which facilitates control of specific surface area of the material; and on the other hand, greatly shorten cycle of the graphitization process and reducing production costs.

In some embodiments, a ratio of heating rate and cooling rate during graphitization can be 0.5, 0.6, 0.7, 0.8, 0.9, or 1.0. Controlling the ratio of heating rate and cooling rate facilitates escape of volatile matters inside the material, so as to maintain product of pore volume and specific surface area of the material at a relatively constant value.

It can be understood that after graphitization, a portion of the binder may be difficult to convert into graphitized carbon, and the portion that cannot be converted into graphitized carbon exists on surface of artificial graphite particles in the form of amorphous carbon.

In some embodiments, after graphitization, at least one of crushing, sieving and demagnetizing is further performed. Preferably, after carbonization, crushing, demagnetizing and sieving are performed in sequence.

In some embodiments, a manner of the crushing is any one of a mechanical crusher, an airflow crusher, and a low-temperature crusher.

In some embodiments, a manner of the sieving is any one of a fixed screen, a drum screen, a resonance screen, a roller screen, a vibrating screen, and a chain screen. A mesh of the sieving is 100 meshes to 500 meshes, and specifically can be 100 meshes, 200 meshes, 250 meshes, 325 meshes, 400 meshes, and 500 meshes, etc. A particle size of the anode material is controlled within the above range, which facilitates improvement of processing performance of the anode material.

In some embodiments, a device of the demagnetizing is any one of a permanent magnet drum magnetic separator, an electromagnetic iron remover, and a pulsating high gradient magnetic separator. The demagnetizing is to control final content of magnetic substance in the anode material, avoiding the magnetic substance from discharge effect of battery and safety of battery during use.

An anode material, including artificial graphite, and there are pores inside and/or on surface of the artificial graphite. The anode material has a pore volume of V cm³/kg, a true density of D g/cm³, and a specific surface area of S m²/g, where 4.0 ≤ V*S/D ≤ 10. The pore volume is obtained by calculation in a pore size range of 17Å to 3000Å using a BJH Desortation cumulative volume of pores model, by testing by ASAP2460 equipment of American Micromeritics.

The anode material by the disclosure is produced through a continuous graphitization process, and the time and temperature of all materials passing through high temperature zone are consistent. And, by controlling heating rate and cooling rate, volatile components, impurity elements, and the like in the material are allowed to escape uniformly and quickly. At the same time, a certain amount of additive is introduced, so as to achieve accurate control of pores inside and/or on surface of the graphite, and make the pore volume, specific surface area, and true density of the materials arrive desirable control and design requirements. The pores are formed inside and/or on surface of the graphite, which serve as additional lithium storage space, increasing lithium storage capacity of the anode material, as well as increasing the specific surface area. When the anode material is made into an electrode for a battery, after electrolyte is injected, the pores inside the artificial graphite particle are filled with the electrolyte. During charging and discharging, an electrochemical reaction occurs inside the electrode, and more lithium ion diffusion channels and electrochemical reaction interfaces are brought by the pores for the anode material, thus promoting diffusion of lithium ions at solid-liquid interface and in solid phase, reducing concentration polarization, and facilitating improvement of capacity and rate performance of the anode material.

Generally, in the artificial graphite, a certain range of pore volume increases diffusion channel of Li ion, and a certain range of specific surface area ensures a sufficient electrochemical reaction interface, thus promoting diffusion of lithium ions at solid-liquid interface and in solid phase, reducing concentration polarization, and facilitating improvement of capacity and rate performance of the anode material. On this basis, the applicant has found through deep research that although there are sufficient diffusion channels and electrochemical reaction area for lithium ion, there is still wide room for improvement in rate performance. This is because that when lithium ions diffuse to surface of an artificial graphite, if arrangement of carbon atoms of the artificial graphite is relatively chaotic and degree of order thereof is less, there is a huge obstacle for the lithium ions to enter interior of the artificial graphite material to undergo electrochemical reaction with carbon atoms. Thus the diffusion channel and electrochemical reaction area are not fully utilized. While degree of order of an artificial graphite is directly related to true density thereof. In the present disclosure, V*S/D of the anode material is controlled within the above range, which facilitates combination of lithium ion and sufficient carbon atom under low obstacle, so as to obtain the anode material with better rate performance and capacity.

In some embodiments, the anode material has a particle size D₅₀ of 10 µm to 30 µm, which specifically can be 10µm, 11 µm, 12 µm, 13 µm, 14 µm, 15 µm, 20 µm, 25 µm, or 30µm, which is not limited herein. The median particle size of the anode material is controlled within the above range, which facilitates improving cycle performance of the anode material.

It should be noted that, D₁₀ represents a particle size corresponding to the cumulative particle size distribution percentage of powder reaching 10%. D₅₀ represents a particle size corresponding to the cumulative particle size distribution percentage reaching 50%, and D₉₀ represents a particle size corresponding to the cumulative particle size distribution percentage reaching 90%.

In some embodiments, the anode material has a particle size D₁₀ ≥ 5 µm, and specifically can be 5 µm, 5.5 µm, 6 µm, 7 µm, 8 µm, or 1 0µm, which is not limited herein.

In some embodiments, the anode material has a particle size D₉₀ ≤ 50 µm, and specifically can be 50 µm, 49 µm, 48 µm, 47 µm, 46 µm, 45 µm, 42 µm, or 40 µm, which is not limited herein.

In some embodiments, the anode material has a pore volume of V cm³/kg, where 5 ≤ V ≤ 8, and specifically can be 5, 5.2, 5.5, 5.8, 6.0, 6.2, 6.5, 6.8, 7.0, 7.5, or 8.0, which is not limited herein.

In some embodiments, the anode material has a specific surface area of S m²/g, where 1.78 ≤ S ≤ 3.0, and specifically can be 1.78, 1.85, 1.95, 2.00, 2.25, 2.43, 2.57, 2.61, 2.72, 2.85 or 3.0, which is not limited herein. It can be understood that an excessively large specific surface area tends to form a solid electrolyte membrane, and consumes too much irreversible lithium salt, resulting reduction of initial efficiency of battery.

In some embodiments, the anode material has a true density of D g/cm³, where 2.210 ≤ D ≤ 2.265, and specifically can be 2.210, 2.215, 2.218, 2.220, 2.252, 2.263, 2.260, or 2.265, which is not limited herein.

In some embodiments, the pore includes at least one of micro-pore and meso-pore.

In some embodiments, the pores has an average pore size of 50Å to 200Å, and specifically can be 50Å, 51Å, 52Å, 52.5Å, 53.8Å, 56.7Å, 60Å, 70Å, 100 Å, 150Å or 200Å.

In some embodiments, the anode material has an interplanar spacing d₀₀₂ of (002) plane determined by X-ray diffraction, where 3.355Å ≤ d₀₀₂ ≤ 3.365Å. The interplanar spacing d₀₀₂ is within the above range, showing that the artificial graphite particle has a high graphite crystallinity, i.e., a high graphitization degree, and the product has a high capacity.

In some embodiments, the artificial graphite has a peak intensity ratio I₀₀₂/I₁₁₀ of (002) plane to (110) plane of 65.0 to 120.0 and a peak intensity ratio I₀₀₄/I₁₁₀ of (004) plane to the (110) plane of 3.0 to 6.0 determined by X-ray diffraction. I₀₀₂/I₁₁₀ and I₀₀₄/I₁₁₀ are within the above ranges, the material has a high degree of orientation and a low cycling expansion. Specifically, the ratio I₀₀₂/I₁₁₀ can be 65.0, 70.0, 75.0, 80.0, 85.3, 89.2, 90.5, 95.1, 100.0, 111.0, or 120.0, which is not limited herein. The ratio I₀₀₄/I₁₁₀ can be 3.0, 3.2, 3.5, 3.8, 4.1, 4.2, 4.5, 5.2, 5.8, 5.9, or 6.0, which is not limited herein.

In some embodiments, the artificial graphite includes an artificial graphite primary particle and/or an artificial graphite secondary particle.

In some embodiments, the anode material further includes an amorphous carbon, and a mass ratio of the amorphous carbon in the anode material is 0.1 wt% to 5 wt%. The presence of the amorphous carbon provides more irregular and more opened diffusion paths for lithium ion, which facilitates improvement of rate performance of the material.

In some embodiments, the anode material has a specific capacity of 320 mAh/g to 370 mAh/g, which specifically can be 320 mAh/g, 340 mAh/g, 342 mAh/g, 345 mAh/g, 353 mAh/g, 355 mAh/g, 357 mAh/g, 360 mAh/g, 365 mAh/g, or 370 mAh/g, etc., which is not limited herein. Preferably, the anode material has a specific capacity of 340 mAh/g to 370 mAh/g.

A battery, including the above anode material.

Those skilled in the art will understand that the preparation method of the battery described above is only an embodiment. Other methods commonly used in the art can also be used without departing from the content disclosed in the present disclosure, and other types of battery can also be prepared for testing, such as sodium ion battery and potassium ion battery.

The present disclosure is further described below through several examples. The embodiments of the present disclosure are not limited to the following specific examples. Within the scope of protection, changes can be implemented appropriately.

### Example 1

The preparation method of anode material of this example, including following steps:
(1) Daqing petroleum coke, as a green coke raw material, was crushed and shaped by a shaping device to obtain a crushed and shaped coke powder with a median particle size of 15 µm;
(2) the coke powder was uniformly mixed with phenolic resin binder, water, and boron oxide in a mass ratio of 100:6:15:2 to obtain a mixture;
(3) the mixture was press-molded under 10 MPa pressure to obtain a first precursor, where size of the first precursor after press-molding was ϕ 30 mm × 50 mm;
(4) the first precursor was pre-carbonized at a temperature of 800°C for 4 h, and cooled to obtain a modified second precursor;
(5) the second precursor was graphitized at 2900°C by a continuous graphitizing furnace to obtain a graphitized product, where temperature rise curve was as follows: the temperature was increased to 2900°C at a heating rate of 15.5°C/min, held at 2900°C for 2.5 h, and then cooled to 30°C at a cooling rate of 22.5°C/min, where a ratio of the heating rate and the cooling rate was controlled at 0.68; and
(6) the graphitized product was scattered, demagnetized and sieved in 325 mesh to obtain the anode material.

The above anode material included primary particle artificial graphite and secondary particle artificial graphite, and most of which is primary particle artificial graphite.

### Example 2

The preparation method of anode material of this example, including following steps:
(1) Baosteel pitch coke, as a green coke raw material, was crushed and shaped by a shaping device to obtain a crushed and shaped coke powder with a median particle size of 16 µm;
(2) the coke powder was uniformly mixed with petroleum resin, benzene, and boron carbide in a mass ratio of 100:5:20:2 to obtain a mixture;
(3) the mixture was press-molded under 10 MPa pressure to obtain a first precursor, where size of the first precursor after press-molding was ϕ 30 mm × 50 mm;
(4) the first precursor was pre-carbonized at a temperature of 800°C for 4 h, and cooled to obtain a modified second precursor;
(5) the second precursor was graphitized at 2900°C by a continuous graphitizing furnace to obtain a graphitized product, where temperature rise curve was as follows: the temperature was increased to 2900°C at a heating rate of 14°C/min, held at 2900°C for 2.5 h, and then cooled to 30°C at a cooling rate of 22.5°C/min, where a ratio of the heating rate and the cooling rate was controlled at 0.62; and
(6) the graphitized product was scattered, demagnetized and sieved in 250 mesh to obtain the anode material.

The above anode material included primary particle artificial graphite and secondary particle artificial graphite, and most of which is primary particle artificial graphite.

### Example 3

The preparation method of anode material of this example, including following steps:
(1) Jinzhou needle coke, as a burning coke raw material, was crushed and shaped by a shaping device to obtain a crushed and shaped coke powder with a median particle size of 15 µm;
(2) the coke powder was uniformly mixed with phenolic resin binder, water, and boron oxide in a mass ratio of 100:6:15:2 to obtain a mixture;
(3) the mixture was press-molded under 10 MPa pressure to obtain a first precursor, where size of the first precursor after press-molding was ϕ 30 mm × 50 mm;
(4) the first precursor was pre-carbonized at a temperature of 800°C for 4 h, and cooled to obtain a modified second precursor;
(5) the second precursor was graphitized at 2850°C by a continuous graphitizing furnace to obtain a graphitized product, where temperature rise curve was as follows: the temperature was increased to 2850°C at a heating rate of 16°C/min, held at 2850°C for 2.5 h, and then cooled to 30°C at a cooling rate of 22°C/min, where a ratio of the heating rate and the cooling rate was controlled at 0.73; and
(6) the graphitized product was scattered, demagnetized and sieved in 250 mesh to obtain the anode material.

The above anode material included primary particle artificial graphite and secondary particle artificial graphite, and most of which is primary particle artificial graphite.

### Example 4

The preparation method of anode material of this example, including following steps:
(1) Jingyang needle coke, as a green coke raw material, was crushed and shaped by a shaping device to obtain a crushed and shaped coke powder with a median particle size of 18 µm;
(2) the coke powder was uniformly mixed with petroleum resin, benzene, and sodium borate in a mass ratio of 100:6:15:2 to obtain a mixture;
(3) the mixture was press-molded under 10 MPa pressure to obtain a first precursor, where size of the first precursor after press-molding was ϕ 30 mm × 50 mm;
(4) the precursor was pre-carbonized at a temperature of 800°C for 4 h, and cooled to obtain a modified second precursor;
(5) the second precursor was graphitized at 2850°C by a continuous graphitizing furnace to obtain a graphitized product, where temperature rise curve was as follows: the temperature was increased to 2850°C at a heating rate of 16.5°C/min, held at 2850°C for 3 h, and then cooled to 30°C at a cooling rate of 22°C/min, where a ratio of the heating rate and the cooling rate was controlled at 0.75; and
(6) the graphitized product was scattered, demagnetized and sieved in 250 mesh to obtain the anode material.

The above anode material included primary particle artificial graphite and secondary particle artificial graphite, and most of which is primary particle artificial graphite.

### Example 5

This example was conducted as Example 1 only excepting that: in step (2), the coke powder was uniformly mixed with epoxy resin, water, and boron oxide in a mass ratio of 100:6:15:2 to obtain a mixture.

The anode material obtained by this example includes primary particle artificial graphite and secondary particle artificial graphite, and most of which is primary particle artificial graphite.

### Example 6

This example was conducted as Example 1 only excepting that: in step (2), the coke powder was uniformly mixed with coumarone resin, water, and boron oxide in a mass ratio of 100:5:15:2 to obtain a mixture.

The anode material obtained by this example includes primary particle artificial graphite and secondary particle artificial graphite, and most of which is primary particle artificial graphite.

### Example 7

This example was conducted as Example 1 only excepting that: in step (2), the coke powder was uniformly mixed with epoxy resin, water, and boron nitride in a mass ratio of 100:6:15:2 to obtain a mixture.

The anode material obtained by this example includes primary particle artificial graphite and secondary particle artificial graphite, and most of which is primary particle artificial graphite.

### Example 8

This example was conducted as Example 1 only excepting that: in step (2), the coke powder was uniformly mixed with petroleum resin, toluene, and boric acid in a mass ratio of 100:6:15:2 to obtain a mixture.

The anode material obtained by this example includes primary particle artificial graphite and secondary particle artificial graphite, and most of which is primary particle artificial graphite.

### Example 9

This example was conducted as Example 1 only excepting that: in step (2), the coke powder uniformly was mixed with phenolic resin, water, and boron oxide in a mass ratio of 100:3:15:2 to obtain a mixture.

The anode material obtained by this example includes primary particle artificial graphite and secondary particle artificial graphite, and most of which is primary particle artificial graphite.

### Example 10

This example was conducted as Example 1 only excepting that: in step (2), the coke powder was uniformly mixed with phenolic resin, water, and silicon carbide in a mass ratio of 100:20:15:2 to obtain a mixture.

The anode material obtained by this example includes primary particle artificial graphite and secondary particle artificial graphite, and most of which is secondary particle artificial graphite.

### Example 11

This example was conducted as Example 1 only excepting that: in step (2), the coke powder was uniformly mixed with phenolic resin, water, and sodium borate in a mass ratio of 100:6:5:2 to obtain a mixture.

The anode material obtained by this example includes primary particle artificial graphite and secondary particle artificial graphite, and most of which is primary particle artificial graphite.

### Example 12

This example was conducted as Example 1 only excepting that: in step (2), the coke powder was uniformly mixed with phenolic resin, water, and boron oxide in a mass ratio of 100:6:50:2 to obtain a mixture.

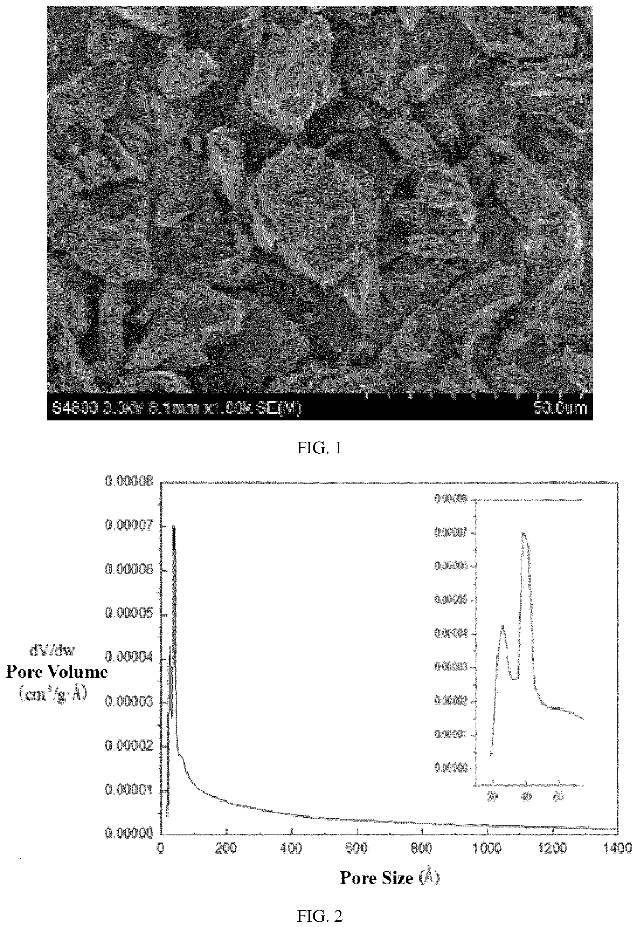

From the scanning electron microscope image of FIG. 1, it can be seen that the anode material obtained by this example includes primary particle and secondary particle, and most of which is primary particle artificial graphite. From the distribution curve of a pore size of FIG. 2, it can be seen that the anode material includes pores therein, which mainly includes micro-pores and meso-pores.

### Example 13

This example was conducted as Example 1 only excepting that: in step (2), the coke powder was uniformly mixed with phenolic resin, water, and boron chloride in a mass ratio of 100:6:15:1 to obtain a mixture.

The anode material obtained by this example includes primary particle artificial graphite and secondary particle artificial graphite, and most of which is primary particle artificial graphite.

### Example 14

This example was conducted as Example 1 only excepting that: in step (2), the coke powder was uniformly mixed with phenolic resin, water, and boron oxide in a mass ratio of 100:6:15:5 to obtain a mixture.

The anode material obtained by this example includes primary particle artificial graphite and secondary particle artificial graphite, and most of which is primary particle artificial graphite.

### Example 15

This example was conducted as Example 1 only excepting that: in step (3), the pressure for press-molding was 5 MPa.

The anode material obtained by this example includes primary particle artificial graphite and secondary particle artificial graphite, and most of which is primary particle artificial graphite.

### Example 16

This example was conducted as Example 1 only excepting that: in step (3), the pressure for press-molding was 100 MPa.

The anode material obtained by this example includes primary particle artificial graphite and secondary particle artificial graphite, and most of which is primary particle artificial graphite.

### Example 17

This example was conducted as Example 1 only excepting that: in step (4), the temperature for pre-carbonizing the precursor was 500°C.

The anode material obtained by this example includes primary particle artificial graphite and secondary particle artificial graphite, and most of which is primary particle artificial graphite.

### Example 18

This example was conducted as Example 1 only excepting that: in step (4), the temperature for pre-carbonizing the precursor was 1200°C.

The anode material obtained by this example includes primary particle artificial graphite and secondary particle artificial graphite, and most of which is primary particle artificial graphite.

### Example 19

This example was conducted as Example 1 only excepting that: in step (5), the temperature of graphitization was 2800°C.

The anode material obtained by this example includes primary particle artificial graphite and secondary particle artificial graphite, and most of which is primary particle artificial graphite.

### Example 20

This example was conducted as Example 1 only excepting that: in step (5), the temperature of graphitization was 3000°C.

The anode material obtained by this example includes primary particle artificial graphite and secondary particle artificial graphite, and most of which is primary particle artificial graphite.

### Example 21

This example was conducted as Example 1 only excepting that: in step (5), the holding time of graphitization was 2 h.

The anode material obtained by this example includes primary particle artificial graphite and secondary particle artificial graphite, and most of which is primary particle artificial graphite.

### Example 22

This example was conducted as Example 1 only excepting that: in step (5), the holding time of graphitization was 4 h.

The anode material obtained by this example includes primary particle artificial graphite and secondary particle artificial graphite, and most of which is primary particle artificial graphite.

### Comparative Example 1

This example was conducted as Example 1 excepting that: the second precursor obtained in step (4) was loaded into a graphite crucible, and then the graphite crucible was transferred into an Acheson furnace and underwent a high-temperature graphitization process to obtain an anode material. The graphitization process was conducted at a maximum temperature of 2900°C for a holding time of 2.5 h, with a heating rate of 0.7°C/min and a cooling rate of 0.1 °C/min. Such that the anode material was obtained.

### Comparative Example 2

Daqing petroleum coke, as a green coke raw material, was crushed and shaped by a shaping device to obtain a crushed and shaped coke powder with a median particle size of 15 µm; the coke powder was loaded into an Acheson furnace and underwent a high-temperature graphitization process to obtain an anode material. The graphitization process was conducted at a maximum temperature of 2900°C for a holding time of 8 h, with a heating rate of 0.7°C/min and a cooling rate of 0.1°C/min. Such that the anode material was obtained.

### Comparative Example 3

Daqing petroleum coke, as a green coke raw material, was pre-carbonized at a temperature of 800°C for 4 h, and then loaded into a continuous graphitization furnace, where temperature rise curve was as follows: the temperature was increased to 2800°C at a heating rate of 15°C/min, held at 2800°C for 2.5 h, and then cooled to 30°C at a cooling rate of 10°C/min, where a ratio of the heating rate and the cooling rate was controlled at 1.5. The graphitized product was crushed and shaped to obtain the anode material, with a controlled median particle size of 15 µm.

### Test method

### (1) Test method for median particle size of anode material:

A particle size distribution range of the anode material was tested by a Malvern laser particle size meter.

### (2) Test method for pore volume and average pore size of anode material:

The pore volume V and average pore size were obtained by calculation in a pore size range of 17Å to 3000Å using a BJH Desortation cumulative volume of pores model, by testing by ASAP2460 equipment of American Micromeritics.

### (3) Test method for specific surface area of anode material:

A dynamic specific surface area rapid tester JW-DX purchased from Beijing JWGB Sci & Tech Ltd was adopted for testing, with a unit of m²/g.

### (4) Test method for true density of anode material:

A true density meter PENTAPYC 5200e purchased from Anton Paar QuantarTec Inc. was adopted for testing. Appling Archimedes principle of gas displacement (density = mass / volume), the Bohr's law (PV = nRT) of inert gas with small molecule diameter under certain conditions was adopted to accurately measure the true volume of the tested material, so as to obtain the true density thereof, with a unit of g/cm³.

### (5) Test method for surface morphology of anode material:

A Hitachi S4800 scanning electron microscope was adopted for observing surface morphology of anode material particles.

(6) A X-ray diffraction was adopted to character interplanar spacing d₀₀₂ of (002) plane, with a unit of Å, as well as peak intensity ratios of (002) plane and (110) plane, and (004) plane and (110) plane.

### (7) Test method for performance of battery:

The anode materials prepared by Examples 1 to 22 and Comparative Examples 1 to 3, carboxymethyl cellulose (CMC), conductive carbon black (SP), and styrene-butadiene rubber (SBR)in a mass ratio of 95:1.5:1.5:2 were magnetically stirred in deionized water for 8 h, to be uniformly mixed. The mixed slurry was coated on copper foil and dried under vacuum at 60°C for a working electrode. Metal lithium was used as a counter electrode and a reference electrode. Celgard2325 was used as separator. 1 mol·L-1 LiPF6-EC (ethylene carbonate) / DMC (dimethyl carbonate) / EMC (ethyl methyl carbonate) (volume ratio was 1:1:1) was used as electrolyte. A CR2016 button battery was assembled in a glove box filled with high-purity argon.

Teat of initial discharge capacity / initial discharge efficiency was performed on LAND battery tester, with charging and discharging conditions as follows: stood for 2 h; discharged: 0.1C to 0.005V, 0.09C, 0.08C... 0.02C to 0.001V; stood for 15 min; charged: 0.1C to 1.5V; stood for 15 min.

A button half-battery was tested for rate performance at 25±2°C to obtain charge and discharge specific capacities and coulombic efficiencies of 0.2C, 1C, and 2C.

Test method for cyclic expansion: the anode material was prepared into pole pieces and then assembled into a mold battery. An expansion rate of the mold battery after 20 cycles was recorded by a sensor. The expansion rate = change in thickness of pole piece d / original thickness of pole piece * 100%.

Performance test results of the anode materials obtained by the above Examples and Comparative Examples are shown in Table 1 below, and performance test results of the battery made by the anode materials are shown in Table 2 below:

**Table 1. Performance Comparison Results of Anode Materials**

| Sa mpl e | Pore Volume V | Specific Surface Area S | True Density D | V*S/ D | Average Pore Size of pores (Å) | D10 (µm) | D50 (µm) | D90 (µm) | d₀₀₂ (Å) | I₀₀₂/I₁₁₀ | I₀₀₄/I₁₁₀ | Graphitiz-ation Energy Consumpt -ion (kwh/ton) |
|---|---|---|---|---|---|---|---|---|---|---|---|---|
| S1 | 7.24 | 2.89 | 2.212 | 9.46 | 114.5 | 7.9 | 16.2 | 31.5 | 3.359 | 84.4 | 4.3 | 2600 |
| S2 | 7.14 | 2.85 | 2.229 | 9.13 | 119.2 | 9.1 | 16.8 | 32.9 | 3.359 | 85.3 | 4.5 | 2600 |
| S3 | 7.01 | 2.82 | 2.248 | 8.79 | 123.4 | 8.3 | 15.7 | 31.2 | 3.353 | 113.7 | 5.4 | 2500 |
| S4 | 6.98 | 2.80 | 2.234 | 8.75 | 115.2 | 9.4 | 19.8 | 37.1 | 3.367 | 82.1 | 3.8 | 2500 |
| S5 | 6.78 | 2.81 | 2.264 | 8.42 | 121.4 | 7.5 | 15.9 | 30.4 | 3.360 | 83.4 | 4.2 | 2600 |
| S6 | 6.68 | 2.72 | 2.214 | 8.21 | 116.8 | 8.2 | 16.0 | 31.5 | 3.359 | 78.5 | 3.7 | 2600 |
| S7 | 6.57 | 2.66 | 2.218 | 7.88 | 124.6 | 8.5 | 15.8 | 31.8 | 3.359 | 86.7 | 4.5 | 2600 |
| S8 | 6.46 | 2.59 | 2.215 | 7.55 | 117.8 | 8.7 | 16.6 | 31.9 | 3.360 | 92.1 | 4.9 | 2600 |
| S9 | 6.36 | 2.50 | 2.213 | 7.18 | 113.5 | 6.9 | 15.2 | 30.2 | 3.359 | 88.6 | 4.8 | 2600 |
| S10 | 6.73 | 2.247 | 2.223 | 6.80 | 147.8 | 12.2 | 27.5 | 45.7 | 3.360 | 85.4 | 4.5 | 2600 |
| S11 | 6.37 | 2.37 | 2.226 | 6.78 | 123.4 | 8.1 | 16.5 | 31.6 | 3.359 | 83.4 | 3.9 | 2600 |
| S12 | 6.48 | 2.17 | 2.231 | 6.30 | 119.3 | 7.9 | 15.9 | 30.8 | 3.359 | 84.6 | 3.9 | 2600 |
| S13 | 5.89 | 2.19 | 2.221 | 5.81 | 79.5 | 7.3 | 14.9 | 27.2 | 3.360 | 86.3 | 4.0 | 2600 |
| S14 | 8.24 | 2.11 | 2.208 | 7.87 | 164. 6 | 7.6 | 15.7 | 30.6 | 3.362 | 86.2 | 3.7 | 2600 |
| S15 | 5.65 | 2.06 | 2.242 | 5.19 | 124.3 | 5.9 | 14.5 | 28.8 | 3.359 | 128.6 | 6.1 | 2600 |
| S16 | 5.25 | 2.04 | 2.227 | 4.81 | 125.6 | 10.1 | 20.5 | 41.1 | 3,360 | 69.4 | 3.4 | 2600 |
| S17 | 5.72 | 1.84 | 2.234 | 4.71 | 118.6 | 8.1 | 15.8 | 31.0 | 3.361 | 73.2 | 3.9 | 2600 |
| S18 | 5.56 | 1.80 | 2.231 | 4.49 | 132.4 | 8.1 | 16.1 | 30.9 | 3.359 | 89.4 | 4.4 | 2600 |
| S19 | 5.21 | 1.84 | 2.214 | 4.33 | 98.4 | 7.4 | 15.4 | 29.5 | 3.362 | 91.3 | 4.6 | 2400 |
| S20 | 5.11 | 1.79 | 2.243 | 4.08 | 136.7 | 7.8 | 15.9 | 31.4 | 3.359 | 85.7 | 4.3 | 2700 |
| S21 | 6.23 | 3.08 | 2.212 | 8.67 | 107.6 | 8.2 | 16.0 | 31.9 | 3.361 | 86.2 | 4.1 | 1900 |
| S22 | 4.86 | 2.26 | 2.238 | 4.90 | 132.3 | 8.2 | 15.8 | 31.3 | 3.358 | 80.2 | 3.7 | 3300 |
| D1 | 6.78 | 3.36 | 2.102 | 10.84 | 97.9 | 6.9 | 14.6 | 29.8 | 3.368 | 116.8 | 5.7 | 12000 |
| D2 | 2.58 | 1.54 | 2.256 | 1.76 | 106.6 | 5.4 | 12.8 | 25.2 | 3.359 | 134.6 | 6.2 | 15500 |
| D3 | 7.88 | 2.90 | 2.213 | 10.33 | 78.6 | 7.8 | 15.2 | 31.3 | 3.360 | 76.6 | 4.5 | 2800 |

**Table 2. Performance Comparison Results of Batteries**

| Sample | Specific Capacity (mAh/g) | Initial Coulombic Efficiency (%) | Capacity Retention at 1C/0.2C (%) | Capacity Retention at 2C/0.2C (%) | Cyclic Expansion after 20 cycles (%) |
|---|---|---|---|---|---|
| S1 | 346.2 | 94.4 | 61.5 | 21.7 | 18.7 |
| S2 | 345.6 | 94.3 | 61.3 | 21.5 | 18.9 |
| S3 | 357.6 | 94.1 | 53.8 | 14.4 | 20.8 |
| S4 | 354.8 | 94.2 | 57.2 | 18.1 | 18.1 |
| S5 | 346.1 | 94.3 | 61.3 | 21.5 | 18.6 |
| S6 | 346.4 | 94.4 | 61.4 | 21.6 | 18.2 |
| S7 | 346.3 | 94.4 | 61.4 | 21.5 | 18.9 |
| S8 | 346.0 | 94.3 | 61.1 | 21.1 | 19.0 |
| S9 | 346.9 | 94.1 | 61.5 | 21.6 | 18.8 |
| S10 | 345.8 | 94.5 | 61.7 | 21.8 | 19.2 |
| S11 | 346.3 | 94.3 | 61.4 | 21.3 | 19.1 |
| S12 | 346.4 | 94.3 | 61.3 | 21.4 | 18.7 |
| S13 | 345.6 | 94.5 | 61.3 | 21.3 | 18.6 |
| S14 | 344.7 | 93.9 | 61.2 | 21.3 | 19.2 |
| S15 | 346.2 | 94.3 | 61.4 | 21.3 | 21.4 |
| S16 | 346.1 | 94.2 | 61.5 | 21.5 | 17.7 |
| S17 | 345.7 | 94.4 | 61.7 | 21.5 | 19.3 |
| S18 | 346.8 | 94.3 | 61.5 | 21.6 | 19.2 |
| S19 | 345.3 | 94.5 | 62.4 | 22.4 | 18.7 |
| S20 | 347.5 | 94.3 | 61.2 | 21.1 | 18.6 |
| S21 | 345.0 | 93.6 | 61.1 | 21.5 | 18.9 |
| S22 | 344.9 | 94.0 | 61.0 | 20.9 | 19.2 |
| D1 | 338.1 | 93.1 | 59.2 | 19.2 | 21.0 |
| D2 | 342.5 | 93.5 | 58.8 | 18.5 | 22.3 |
| D3 | 343.6 | 93.8 | 58.7 | 17.9 | 21.5 |

From the test data of Examples 1 to 22, it can be seen that there are pores formed inside and/or on surface of the graphite prepared by examples of the present disclosure, and high rate charge-discharge performance of the materials are significantly improved. This is because when the anode materials are made into electrodes and applied in lithium ion batteries, lithium ions fully combine with carbon atoms in artificial graphite under low obstacle, and rapidly diffuse at solid-liquid interface and in solid phase, reducing concentration polarization, and facilitating improvement of rate performance of the anode material. Among them, in Examples 3 and 4, the use of needle coke as a coke raw material results inferior rate performances of the batteries tested compared to other examples. This is to blame for nature of the needle coke itself, and it does not need to consider that the technical solution of the present disclosure cannot solve technical problem of poor rate performance.

In addition, when V*S/D is controlled within 4.0 to 10, an effective active site on surface of artificial graphite, as the anode material, for lithium intercalation and de-intercalation reaction becomes more, and specific capacity of the anode material is higher.

The anode materials were prepared in Acheson graphitization furnace in Comparative Examples 1 and 2, it can be seen that although the materials have a certain pore structure, V*S/D deviates from the above range, and rate performances of the artificial graphites, as the anode material, significantly decrease. Moreover, their production processes consume a large amount of energy, has a high utilization of thermal energy, and significantly increases production time and cost.

Although the anode material was prepared using continuous graphitization process in Comparative Example 3, the coke raw material particles were directly put into the continuous graphitization furnace without additive, and without other improvement for process, such as controlling ratio of heating rate and cooling rate, and V*S/D deviated from the above range. Thus, its capacity and rate performance are worse than that of Example 1, as produced under the same process conditions.

Although the present disclosure is disclosed above in terms of preferred examples, it is not intended to limit the claims, and several possible changes and modifications can be made by any those skilled in the art without departing from the concept of the present application, so the protection scope of the present application should be defined by the claims of the present application.

## Claims

1. An anode material, **characterized in that** the anode material comprises artificial graphite, and there are pores inside and/or on surface of the artificial graphite, and the anode material has a pore volume of V cm³/kg, a true density of D g/cm³, and a specific surface area of S m²/g, wherein 4.0 ≤ V*S/D ≤ 10, and
the pore volume is obtained by calculation in a pore size range of 17Å to 3000Å using a BJH Desortation cumulative volume of pores model, by testing by ASAP2460 equipment of American Micromeritics.

2. The anode material of claim 1, **characterized in that** the anode material satisfies at least one of the following features:
(1) the anode material has a particle size D₅₀ of 10 µm to 30 µm;
(2) the anode material has a particle size D₁₀ ≥ 5 µm; and
(3) the anode material has a particle size D₉₀ ≤ 50 µm.

3. The anode material of claim 1 or 2, **characterized in that** the anode material satisfies at least one of the following features:
(1) the anode material has a pore volume of V cm³/kg, wherein 5 ≤ V ≤ 8;
(2) the anode material has a specific surface area of S m²/g, wherein 1.78 ≤ S ≤ 3.0; and
(3) the anode material has a true density of D g/cm³, wherein 2.210 ≤ D ≤ 2.265.

4. The anode material of claim 1 or 2, **characterized in that** the pore comprises at least one of micro-pore and meso-pore.

5. The anode material of claim 4, **characterized in that** the pores has an average pore size of 50Å to 200Å.

6. The anode material of claim 1 or 2, **characterized in that** the anode material has an interplanar spacing d₀₀₂ of (002) plane determined by X-ray diffraction, wherein 3.355Å ≤ d₀₀₂≤ 3.365Å.

7. The anode material of claim 1 or 2, **characterized in that** the artificial graphite has a peak intensity ratio I₀₀₂/I₁₁₀ of (002) plane to (110) plane of 65.0 to 120.0 and a peak intensity ratio I₀₀₄/I₁₁₀ of (004) plane to the (110) plane of 3.0 to 6.0 determined by X-ray diffraction.

8. The anode material of claim 1 or 2, **characterized in that** the artificial graphite comprises an artificial graphite primary particle and/or an artificial graphite secondary particle.

9. The anode material of claim 1 or 2, **characterized in that** the anode material satisfies at least one of the following features:
(1) the anode material further comprises an amorphous carbon; and
(2) the anode material further comprises an amorphous carbon, and a mass ratio of the amorphous carbon in the anode material is 0.1 wt% to 5 wt%.

10. A battery, **characterized in that** the battery comprises the anode material according to any one of claims 1 to 9.
